# EUROPEAN PATENT SPECIFICATION

(11) **EP 4 530 898 B1**
(45) Date of publication and mention of the grant of the patent: **22.10.2025**
(21) Application number: 24198700.7
(22) Date of filing: 05.09.2024
(51) Int. Cl.: G06F 21/44, H04W 12/06, H04W 12/08, H04W 12/73, H04W 48/18, H04W 60/00, H04W 76/00, H04L 9/40, H04W 12/086, H04W 76/10, H04W 76/11, H04L 12/14, H04M 15/00, H04W 4/24

(54) **ACCESS METHOD, SYSTEM, APPARATUS, AND ELECTRONIC DEVICE FOR A 5G DUAL-DOMAIN PRIVATE NETWORK**
ZUGRIFFSVERFAHREN, SYSTEM, VORRICHTUNG UND ELEKTRONISCHE VORRICHTUNG FÜR EIN PRIVATES 5G-DOPPELDOMÄNENNETZWERK
PROCÉDÉ, SYSTÈME, APPAREIL ET DISPOSITIF ÉLECTRONIQUE D'ACCÈS POUR UN RÉSEAU PRIVÉ À DOUBLE DOMAINE 5G

(30) Priority: 28.09.2023 CN 202311281410
(43) Date of publication of application: 02.04.2025
(73) Proprietor: New H3C Technologies Co., Ltd., Hangzhou, Zhejiang 310052 (CN)
(72) Inventor: Peng, Yi, Beijing 100102 (CN)
(74) Representative: Zimmermann & Partner Patentanwälte mbB

(56) References cited:
- EP-A1- 4 482 215
- WO-A1-2023/174150
- CN-A- 116 528 151
- US-A1- 2019 230 510
- US-A1- 2022 353 680
- US-A1- 2023 087 407
- US-A1- 2023 199 632
- US-A1- 2023 239 818
- ANONYMOUS: "Interworking between 5G network and external Data Networks - 3GPP TS 29.561 version n16.5.0 Release 16", 1 November 2020 (2020-11-01), pages 1 - 73, XP093241874, Retrieved from the Internet <URL:https://www.etsi.org/deliver/etsi_ts/129500_129599/129561/16.05.00_60/ts_129561v160500p.pdf?utm_source=chatgpt.com> [retrieved on 20250121]

## Description

### FIELD

The present disclosure relates to the field of communication technology, and in particular to an access method, system and apparatus, and electronic device for a 5G dual-domain private network.

### BACKGROUND

In order to meet the customer's demands for using a single UE to access the campus intranet and public network without changing their SIM cards or numbers, and without any noticeable disruption, the industry has proposed 5G dual-domain private network. Generally, the access to the campus intranet has high security requirements, and a mechanism is needed to ensure that trusted campus UEs can gain access. Therefore, after the primary authentication, a secondary authentication process is also required for campus UEs.

Primary authentication refers to the primary authentication of the mobile terminal by the Access and Mobility Management function (AMF) when the campus UE connects to the network. Secondary authentication refers to a secondary authentication performed by a Data Network-Authentication, Authorization, and Accountability (DN-AAA) server when the campus UE needs to access the campus intranet after passing the primary authentication.

In the prior art, the secondary authentication is contracted at the granularity of the Data Network Name (DNN) in the Unified Data Management (UDM), which results in the establishment of a Protocol Data Unit (PDU) session between the campus UE and the public network being constrained by secondary authentication. For example, when a campus UE initiates a PDU session with a general DNN, and the DNN is bound with an identifier that indicates that the campus UE needs to carry out secondary authentication, the secondary authentication must be carried out at the same time as the PDU session is established, and if the secondary authentication fails, the establishment of the PDU session between the campus UE and the public network fails, and the user will not be able to access the public network, i.e., the access of the campus UE to the public network is constrained by the secondary authentication.

### SUMMARY

In view of above, the present disclosure provides an access method, system, apparatus, and electronic device for a 5G dual-domain private network, aiming to enable campus UEs to access the public network without the constraint of secondary authentication while ensuring their trusted access.

The examples of this disclosure provide an access method for a 5G dual-domain private network, applied to a public network Session Management Function (SMF) in a 5G Core Network, the method comprises:
in response to a determination that a primary authentication between a campus UE and an Access and Mobility Management function (AMF) is passed, based on a received general Data Network Name (DNN) carried in a protocol data unit (PDU) session establishment request initiated by the campus UE, selecting a public network User Plane Function (UPF) corresponding to the general DNN to establish a user plane path, to trigger the establishment of PDU session between the campus UE and the public network after the user plane path is established; and saving secondary authentication information carried in the PDU session establishment request; the secondary authentication information is information that needs to be verified during a secondary authentication process;
when it is determined that the campus UE needs to access a campus intranet, obtain from a Policy Control Function (PCF), secondary authentication parameters that are bound to a Data Network Access Identifier (DNAI) subscribed by the campus UE; the secondary authentication parameters include: a secondary authentication identifier, and an IP address of a Data Network Authentication, Authorization, and Accounting Server (DN-AAA); the secondary authentication identifier indicates that the campus UE needs a secondary authentication;
when it is determined based on the secondary authentication identifier that the campus UE needs a secondary authentication, sending an access request carrying the secondary authentication information to DN-AAA based on the IP address of the DN-AAA to trigger DN-AAA to perform secondary authentication on the campus UE based on the secondary authentication information;
upon receiving an access success message sent by DN-AAA after determining that the campus UE has passed the secondary authentication based on the secondary authentication information, triggering an Uplink Classifier and Local Breakout User Plane Function (ULCL UPF) corresponding to the DNAI to divert the data packets from the campus UE to both the campus intranet and the public network.

This disclosure also provide an access system for a 5G dual-domain private network comprising a public network SMF of a 5G Core Network, a DN-AAA, a ULCL UPF, and an intranet UPF deployed within a campus intranet;
the public network SMF performs the blocks in the method above;
DN-AAA is used to perform, when receiving the access request sent by the public network SMF, secondary authentication on the campus UE based on the secondary authentication information carried in the access request, or to perform secondary authentication on the campus UE based on the secondary authentication information and the GPSI of the campus UE carried in the access request, and to send an access success message to the public network SMF after determining that the campus UE has passed the secondary authentication;
ULCL UPF is used to be triggered, after the public network SMF receives the access success message, to forward data packets, used by the campus UE to access the campus intranet, through the intranet UPF to the campus intranet, and to forward data packets, used by the campus UE to access the public network, through the public network UPF to the public network;
the intranet UPF is used to forward data packets sent by the ULCL UPF to the campus intranet, wherein the data packets are used by the campus UE to access the campus intranet, or, when receiving packet inspection rules and forwarding action rules issued by the public network SMF, the intranet UPF is used to replace a field of the first IP address with a field of the second IP address when detecting that the field of the first IP address is carried in data packets used by the campus UE to access the campus intranet based on the packet inspection rules and forwarding action rules, and forward the modified packets to the campus intranet; and to replace the field of the second IP address with the field of the first IP address when detecting that the field of the second IP address is carried in data packets sent from the campus intranet to the campus UE, and forward the modified packets to the ULCL UPF, which then forwards them to the campus UE.

The disclosure further provides an access apparatus for a 5G dual-domain private network, applied to the Public Network Session Management Function (SMF) in the 5G Core Network, the apparatus comprises:
a session establishment module, used for: in response to a determination that a primary authentication between the campus UE and the Access and Mobility Management Function (AMF) is passed, based on a received general Data Network Name (DNN) carried in a protocol data unit PDU session establishment request initiated by the campus UE, selecting a public network User Plane Function (UPF) corresponding to the general DNN to establish a user plane path, to trigger the establishment of a PDU session between the campus UE and the public network after the user plane path is established; and saving secondary authentication information carried in the PDU session establishment request; the secondary authentication information is information that needs to be verified during a secondary authentication process;
an acquisition module, used for obtaining from a Policy Control Function (PCF), when it is determined that the campus UE needs to access a campus intranet, secondary authentication parameters that are bound to a Data Network Access Identifier (DNAI) subscribed by the campus UE; the secondary authentication parameters include: a secondary authentication identifier, and an IP address of a Data Network Authentication, Authorization, and Accounting Server (DN-AAA); the secondary authentication identifier indicates that the campus UE needs a secondary authentication;
a transmission module, used for sending, when it is determined based on the secondary authentication identifier that the campus UE needs a secondary authentication, an access request carrying the secondary authentication information to DN-AAA based on the IP address of the DN-AAA to trigger the DN-AAA to perform secondary authentication on the campus UE based on the secondary authentication information;
a control module, used for triggering, upon receiving an access success message sent by DN-AAA after determining that the campus UE has passed the secondary authentication based on the secondary authentication information, an Uplink Classifier and Local Breakout User Plane Function (ULCL UPF) corresponding to the DNAI to divert the data packets from the campus UE to both the campus intranet and the public network.

The disclosure further provides an electronic device, comprising: a processor and a memory for storing computer program instructions that, when executed by the processor, cause the processor to perform the blocks of the above method.

The disclosure also provides a machine-readable storage medium storing computer program instructions that, when executed by a processor, cause the processor to perform the blocks of the above method.

As can be seen from the above technical solutions, in the examples of this disclosure, it is premised that the campus UE subscribes to the secondary authentication function in the PCF with the DNAI as the granularity (note that in the PCF, there are secondary authentication parameters bound to the DNAI subscribed by the campus UE). When it is determined that the campus UE needs to access the campus intranet, the public network SMF obtains from the PCF, the secondary authentication parameters that are bound to the DNAI subscribed by the campus UE. When it is determined that the campus UE requires a secondary authentication based on the secondary authentication identifier included in these parameters, an access request carrying the secondary authentication information is sent to the DN-AAA based on the IP address of the DN-AAA included in the secondary authentication parameters. This triggers the DN-AAA to perform secondary authentication on the campus UE. Upon receiving the access success message, the ULCL UPF corresponding to the DNAI is triggered to forward data packets which are used by the campus UE to access the campus intranet, to the campus intranet via the intranet UPF, and forward data packets which are used by the campus UE to access the public network, to the public network via the public network UPF. This achieves the purpose of performing secondary authentication on the campus UE when it is determined that the campus UE has a need to access the campus intranet, thereby enabling trusted access for the campus UE.

Furthermore, since the campus UE subscribes to the secondary authentication function in the PCF with the DNAI as the granularity, rather than subscribing to it in the Unified Data Management (UDM) with the DNN as the granularity, this allows the public network SMF to directly select the public network UPF corresponding to the general DNN carried in the PDU session establishment request initiated by the campus UE, based on that general DNN, to establish the user plane path and trigger the establishment of the PDU session between the campus UE and the public network, without the need for secondary authentication. In contrast to existing technologies where, if the general DNN in the UDM is bound to an identifier indicating that the campus UE requires secondary authentication, secondary authentication must be performed concurrently with the establishment of the PDU session between the campus UE and the public network, and the PDU session can only be successfully established upon successful secondary authentication, allowing the campus UE to access the public network. This approach enables the campus UE to access the public network without secondary authentication, meaning that regardless of the subsequent success or failure of secondary authentication, the PDU session between the campus UE and the public network has already been established, not affecting the user's access to the public network, and the campus UE's access to the public network is not constrained by secondary authentication.

### BRIEF DESCRIPTION OF THE DRAWINGS

Figure 1 is a network architecture diagram of the access system for a 5G dual-domain private network provided in an exemplary example of the present disclosure.
Figure 2 is a schematic diagram illustrating the access method for a 5G dual-domain private network provided in an exemplary example of the present disclosure.
Figure 3 is a schematic diagram illustrating the process of IP address replacement provided in an exemplary example of the present disclosure.
Figure 4 is a diagram illustrating the interaction flow of the access method for a 5G dual-domain private network provided in an exemplary example of the present disclosure.
Figure 5 is a schematic diagram of the basic hardware structure of the device where the access apparatus for a 5G dual-domain private network is located, as provided in an example of the present disclosure.
Figure 6 is a structural diagram of the access apparatus for a 5G dual-domain private network provided in an example of the present disclosure.

### DETAILED DESCRIPTION

Here, exemplary examples will be described in detail, with their examples identified in the accompanying drawings. When the following description refers to the drawings, unless otherwise indicated, the same numerals in different drawings denote the same or similar elements. The implementations described in the following exemplary examples do not represent all implementations consistent with the present disclosure. Instead, they are merely examples of the apparatus and method consistent with some aspects of the present disclosure, as detailed in the appended claims.

The terminology used in this disclosure is for the purpose of describing particular examples only and is not intended to limit the present disclosure. The use of the singular forms "a" "an" and "the" in this disclosure and the appended claims is intended to include the plural forms as well, unless the context clearly indicates otherwise. It should also be understood that the term "and/or" used herein refers to and encompasses any and all possible combinations of one or more of the associated listed items.

It should be understood that although terms such as first, second, third, etc. may be used in this disclosure to describe various information, these terms should not be limiting. These terms are merely used to distinguish one type of information from another of the same kind. For example, without departing from the scope of the present disclosure, the first information may also be referred to as the second information, and similarly, the second information may also be referred to as the first information. Depending on the context, the word "if" as used herein may be interpreted as "when" or "upon" or "in response to determining".

To better elucidate this solution, the following terms are explained.

The 5G Core Network is the central component of the 5G communication network, responsible for managing and controlling the entire network.

Access and Mobility Management Function (AMF) is a network device in the 5G Core Network that is responsible for the registration, connectivity, mobility, and access security management of mobile users.

Session Management Function (SMF) is a network device in the 5G Core Network that is responsible for Protocol Data Unit (PDU) session management, Internet Protocol (IP) addresses allocation, and User Plane Function (UPF) selection and control for mobile users.

Intermediate Session Management Function (I-SMF) is an SMF that is selected and inserted by the AMF based on the user's current location when the UE moves out of the service area of the SMF.

User Plane Function (UPF) is a network device in the 5G Core Network used for mobile user plane data transmission, routing, and Quality of Service (QoS) processing.

Uplink Classifier (ULCL) is a function of the UPF, where the SMF provides data flow filters (such as IP quintuples) to the UPF, and the UPF then forwards or locally offloads data packets that match the traffic filters.

Policy Control Function (PCF) is a network device in the 5G network used for decision-making relevant to QoS policy control and billing.

Unified Data Management (UDM) is the user's subscription data management center.

Data Network Name (DNN) is similar to the APN in 4G.

Data Network Access Identifier (DNAI) is used to identify the local access point for mobile users accessing a specific application's data network.

Generic Public Subscription Identifier (GPSI) generally corresponds to the user's mobile phone number in mobile networks.

Protocol Data Unit (PDU) session refers to the communication process between a campus User Equipment (UE) and a Data Network (DN). After a PDU session is established, a data transmission channel between UE and DN is also established.

To enable those skilled in the art to better understand the technical solutions provided in the examples of the present disclosure, and to make the aforementioned objectives, features, and advantages of the examples of the present disclosure more apparent and easily understandable, further detailed explanations of the technical solutions in the examples of the present disclosure are provided below in conjunction with the accompanying drawings.

To facilitate understanding of the present method, before describing the method, the system provided in the examples of the present disclosure will be described:

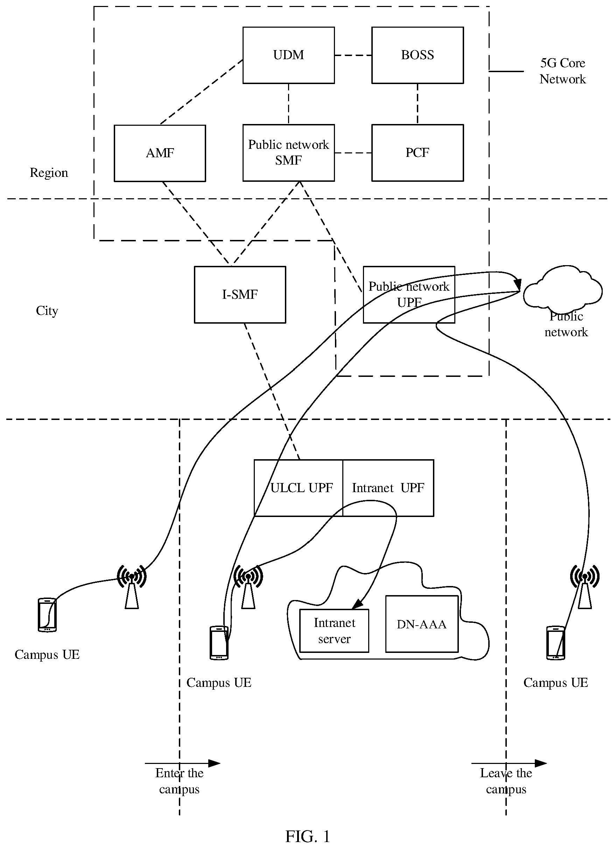

Figure 1 is a networking architecture of a 5G dual-domain private network system provided in an exemplary example of the present disclosure. It should be noted that the implementation environment for the access method of the 5G dual-domain private network provided in the examples of the present disclosure is the networking architecture shown in Figure 1. As shown in Figure 1, the system includes: 5G Core Network, which is connected to the campus intranet; the campus intranet is deployed with a Uplink Classifier and Local Breakout User Plane Function (ULCL UPF), an intranet UPF, an intranet server, and an Authentication, Authorization, and Accounting (AAA) server. The 5G Core Network comprises AMF, a public network SMF, a public network UPF, PCF, UDM, and BOSS. Network elements in the 5G Core Network whose specific locations are not explicitly stated are located in the same positions as conventional setups, and thus will not be elaborated upon here. In the networking connection shown in Figure 1, the enterprise terminal is a 5G UE. As an example, the ULCL UPF and the intranet UPF can be combined. As another example, the system further includes optional Intermediate Session Management Function (I-SMF) and Intermediate User Plane Function (I-UPF) (not shown in Figure 1). The specific workflows of each network element in this 5G dual-domain private network system will be elaborated upon in the following examples.

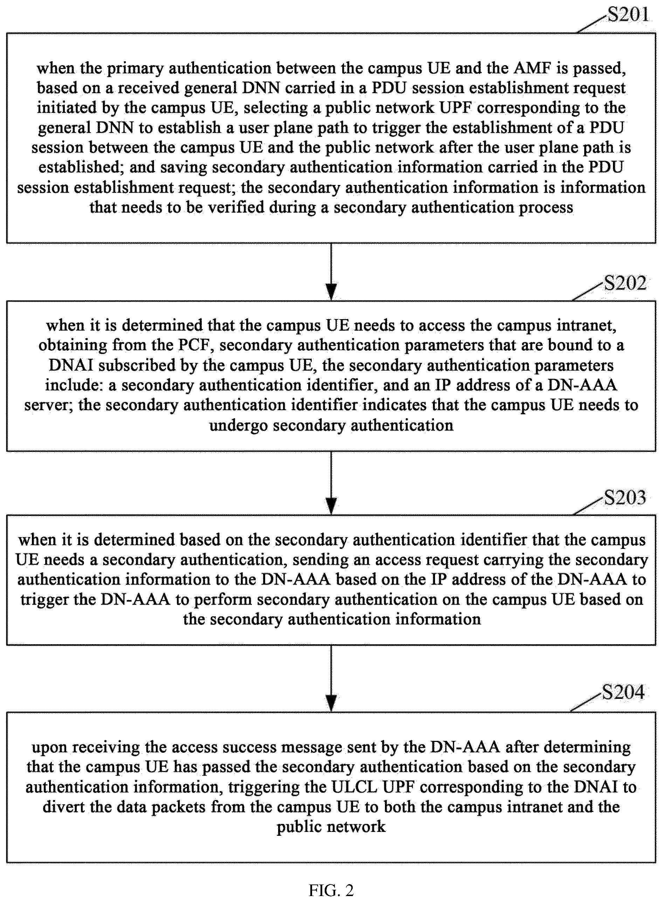

Figure 2 illustrates a schematic diagram of the access method for the 5G dual-domain private network provided in an exemplary example of the present disclosure. As an example, this method can be applied to the public network SMF.

As shown in Figure 2, the process can include the following blocks:
S201, when the primary authentication between the campus UE and the Access and Mobility Management Function (AMF) is passed, based on a received general Data Network Name (DNN) carried in a protocol data unit (PDU) session establishment request initiated by the campus UE, selecting a public network User Plane Function (UPF) corresponding to the general DNN to establish a user plane path to trigger the establishment of a PDU session between the campus UE and the public network after the user plane path is established; and saving secondary authentication information carried in the PDU session establishment request; the secondary authentication information is information that needs to be verified during a secondary authentication process.

In this example, regardless of whether the campus UE is located inside or outside the campus, the campus UE will register with the network (referred to as network registration) after being powered on. When the campus UE performs network registration, the campus UE sends a PDU session establishment request to the AMF through a base station.

Since the campus UE has already subscribed to the aforementioned general DNN in the UDM before registering upon power-on, and the general DNN is bound to the aforementioned public network UPF (also known as toC UPF), upon receiving the PDU session establishment request, the AMF selects to send the PDU session establishment request to the public network SMF based on the general DNN and the current geographical location information of the campus UE. The public network SMF then selects to establish a user plane path with the public network UPF acting as a main anchor point based on the general DNN. After the user plane path between the public network SMF and the public network UPF is established, a PDU session establishment acceptance is sent to the campus UE to complete the establishment of the PDU session between the campus UE and the public network. At this point, the campus UE accesses the public network through the user plane path formed by the public network SMF and the public network UPF.

When the campus UE initiates a PDU session establishment request to the AMF, this request carries secondary authentication information of the campus UE, such as the username and password related to PAP authentication, or the user ID related to EAP authentication. The AMF forwards this secondary authentication information to the public network SMF, which saves it for subsequent use.

It should be noted that the primary authentication process of the campus UE is the authentication process between the campus UE and the AMF in the prior art, and will not be elaborated here. Furthermore, the primary authentication has already succeeded before the campus UE initiates the PDU session establishment request to the AMF.

S202, when it is determined that the campus UE needs to access the campus intranet, obtaining from the Policy Control Function (PCF), secondary authentication parameters that are bound to a Data Network Access Identifier (DNAI) subscribed by the campus UE. The secondary authentication parameters include: a secondary authentication identifier, and an IP address of Data Network Authentication, Authorization, and Accounting (DN-AAA) server; the secondary authentication identifier indicates that the campus UE needs to undergo secondary authentication.

As an example, the public network SMF interacts with the PCF to create a session policy control coupling. When the campus UE is located in an open area of the campus intranet or when the campus UE accesses an application within the campus intranet, the public network SMF reports relevant information to the PCF. The PCF then delivers the secondary authentication parameters bound to the DNAI that the campus UE has subscribed to through Npcf_SMPolicyControl_UpdateNotify. These secondary authentication parameters include at least: the secondary authentication identifier and the IP address of the DN-AAA.

In this example, before the campus UE registers with the network, the secondary authentication function needs to be subscribed to in the PCF at the granularity of DNAI. As an example, the specific implementation of subscribing to the secondary authentication function in the PCF at the granularity of DNAI can be as follows. Generally speaking, one PCF can manage the campus UEs of multiple campuses. One DNAI corresponds to one campus, and all campus UEs in that campus are bound to a single DNAI during subscription. The secondary authentication parameters are also bound to this DNAI. These secondary authentication parameters include at least: a secondary authentication identifier (hereinafter referred to as "secondaryAuth") indicating that the campus UE needs a secondary authentication, the IP address of the DN-AAA (hereinafter referred to as "dnAaaAddress") for performing secondary authentication on the campus UE, and an identifier indicating the need for the DN-AAA to allocate an IP address (hereinafter referred to as "dnAaaIpAddressAllocation").

S203, when it is determined based on the secondary authentication identifier that the campus UE needs a secondary authentication, sending an access request carrying the secondary authentication information to the DN-AAA based on the IP address of the DN-AAA to trigger the DN-AAA to perform secondary authentication on the campus UE based on the secondary authentication information.

In this example, after the public network SMF obtains from the PCF, the secondary authentication parameters that are bound to the DNAI subscribed by the campus UE, the public network SMF sends an access request carrying the previously saved secondary authentication information sent by the UE, to the DN-AAA based on the aforementioned dnAaaAddress. In an example, if there is no direct route between the SMF and the IP address of the DN-AAA (denoted as dnAaaAddress), the SMF will establish a data channel to the DN-AAA through the intranet UPF (also known as toB UPF). This data channel is used for message exchange between the public network SMF and the DN-AAA. Furthermore, if the service area of the public network SMF does not include the current location of the campus UE, the public network SMF may trigger the insertion of I-SMF and I-UPF into the process, establishing a data channel of SMF-[I-SMF]-[I-UPF]-intranet UPF-DN-AAA. This data channel is used for message exchange between the public network SMF and the DN-AAA.

In an example, the ULCL UPF and the intranet UPF serving as a secondary anchor point are deployed together within the campus.

In this example, the secondary authentication information of the campus UE is already configured in the DN-AAA. If the secondary authentication information forwarded by the SMF to the DN-AAA matches the authentication information already configured on the DN-AAA side, the secondary authentication is successful, and the DN-AAA sends an Access-Accept message to the SMF. Otherwise, the secondary authentication fails, and the DN-AAA sends an Access-Reject message to the SMF.

Considering that the aforementioned secondary authentication information typically comprises a username and password, there is a risk that the username and password may be stolen and used by other UEs. Therefore, when configuring the secondary authentication information for the campus UE in the DN-AAA, a General Public Subscriber Identity (GPSI), such as the user's mobile phone number, is also configured for this campus UE. The secondary authentication information and the GPSI have a corresponding relationship, and this GPSI, provided by the operator, is considered trustworthy.

As an example, the access request sent by the public network SMF to the DN-AAA also carries the GPSI of the campus UE. Accordingly, the specific implementation of triggering the DN-AAA to perform secondary authentication on the campus UE based on the secondary authentication information in block S203 mentioned above is to trigger the DN-AAA to perform secondary authentication on the campus UE based on both the secondary authentication information and the GPSI.

In this example, if the secondary authentication information forwarded by the SMF to the DN-AAA matches the configured secondary authentication information on the DN-AAA side, and the GPSI of the campus UE forwarded by the SMF to the DN-AAA matches the configured GPSI corresponding to the configured secondary authentication information on the DN-AAA side, then the secondary authentication is successful, and the DN-AAA sends an access success message to the SMF. If there is a mismatch in either of the following two aspects: (1) the secondary authentication information forwarded by the SMF to the DN-AAA does not match the configured secondary authentication information on the DN-AAA side, or (2) the GPSI forwarded by the SMF to the DN-AAA does not match the configured GPSI corresponding to the configured secondary authentication information on the DN-AAA side, then the secondary authentication is unsuccessful, and the DN-AAA sends an access rejection message to the SMF. For example, if the secondary authentication information is a username and password, and the DN-AAA has configured username A, password bbbbbb, and the username A and GPSI-139xxx11 have a corresponding relationship, but the SMF forwards username A, password bbbbbb, and GPSI-139xxx12, this indicates that the account credentials may have been stolen by GPSI-139xxx12, resulting in a failed secondary authentication.

S204, Upon receiving the access success message sent by the DN-AAA after determining that the campus UE has passed the secondary authentication based on the secondary authentication information, triggering an Uplink Classifier and Local Breakout User Plane Function (ULCL UPF) corresponding to the DNAI to divert the data packets from the campus UE to both the campus intranet and the public network.

In other words, the ULCL UPF corresponding to the DNAI is triggered to forward data packets which are used by the campus UE to access the campus intranet, to the campus intranet via the intranet User Plane Function (UPF), and forward data packets which are used by the campus UE to access the public network, to the public network via the public network UPF.

This completes the process illustrated in Figure 2.

The effect achieved through the process in Figure 2, based on the premise that the campus UE has subscribed to the secondary authentication function in the PCF with DNAI as the granularity (note that in the PCF, there are secondary authentication parameters which are bound to the DNAI subscribed by the campus UE), is as follows: when it is determined that the campus UE needs to access the campus intranet, the public network SMF obtains from the PCF, the secondary authentication parameters which are bound to the DNAI subscribed by the campus UE. When it is determined that the campus UE requires a secondary authentication based on the secondary authentication identifier included in these parameters, an access request carrying the secondary authentication information is sent to the DN-AAA based on the IP address of the DN-AAA included in the secondary authentication parameters, triggering the DN-AAA to perform secondary authentication on the campus UE. Upon receiving the access success message, the ULCL UPF corresponding to the DNAI is triggered to forward data packets which are used by the campus UE to access the campus intranet, to the campus intranet via the intranet UPF, and forward data packets which are used by the campus UE to access the public network, to the public network via the public network UPF. This achieves the purpose of performing secondary authentication on the campus UE when it is determined that the campus UE has a need to access the campus intranet, ensuring trusted access for the campus UE.

Furthermore, since the campus UE subscribes to the secondary authentication function in the Policy Control Function (PCF) with DNAI as the granularity, rather than in the Unified Data Management (UDM) with DNN as the granularity, this allows the public network Session Management Function (SMF) to directly select the public network User Plane Function (UPF) corresponding to the general DNN carried in the PDU session establishment request initiated by the campus UE, based on that general DNN, to establish the user plane path and trigger the establishment of the PDU session between the campus UE and the public network, without the need for secondary authentication. In contrast to existing technologies where, if the general DNN in the UDM is bound to an identifier indicating that the campus UE requires secondary authentication, secondary authentication must be performed concurrently with the establishment of the PDU session between the campus UE and the public network, and the PDU session can only be successfully established upon successful secondary authentication, allowing the campus UE to access the public network. This approach enables the campus UE to access the public network without secondary authentication, meaning that regardless of the subsequent success or failure of secondary authentication, the PDU session between the campus UE and the public network has already been established, not affecting the user's access to the public network, and the campus UE's access to the public network is not constrained by secondary authentication.

In another aspect of this disclosure, considering that in existing technologies, when a campus UE establishes a PDU session using a general DNN, when the campus UE is powered on, the public network UPF or SMF assigns an IP address to the campus UE. After successful secondary authentication, the campus UE still accesses the campus intranet using the IP address assigned by the public network UPF or SMF. However, within the campus intranet, this IP address may already be assigned to another device, leading to the potential for IP address conflicts. The following examples will elaborate on how to resolve this potential IP conflict issue.

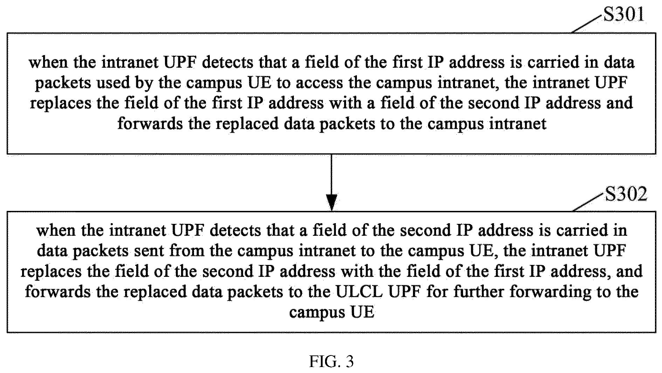

As an example, during the process of establishing the user plane path between the public network SMF and the public network UPF in block S201, the public network UPF or SMF assigns a first IP address (denoted as UE IP1) to the campus UE, which is then forwarded to the campus UE by the public network SMF. In this example, when the secondary authentication information sent by the PCF to the public network SMF also includes an IP address allocation identifier, which indicates that the campus UE requires the DN-AAA to allocate an IP address to it, the access request sent by the public network SMF to the DN-AAA also carries the 3GPP-Allocate-IP-Type attribute information, which is used to request the DN-AAA to allocate an IP address to the campus UE. Correspondingly, after successful secondary authentication, the DN-AAA allocates a second IP address (denoted as UE IP2) to the campus UE and includes UE IP2 in the access success message sent to the public network SMF, but the public network SMF does not forward UE IP2 to the campus UE. The public network SMF determines packet inspection rules and forwarding action rules based on the first and second IP addresses, and issues the packet inspection rules and forwarding action rules to the intranet UPF. The intranet UPF executes the packet inspection rules and forwarding action rules to achieve the following: after successful secondary authentication, the campus UE accesses the public network using UE IP1, while for an intranet server, the intranet server sends data packets using UE IP2. The process of IP address replacement is described in detail below in conjunction with Figure 3.

Figure 3 is a schematic diagram illustrating the process of IP address replacement in an exemplary example of this disclosure. As shown in Figure 3, the process includes the following blocks. As an example, this method can be executed by the intranet UPF.

S301, when the intranet UPF detects that a field of the first IP address is carried in data packets used by the campus UE to access the campus intranet, the intranet UPF replaces the field of the first IP address with a field of the second IP address and forwards the replaced data packets to the campus intranet.

In this example, the public network SMF constructs corresponding packet detection rules and forwarding action rules based on the UE IP1 and UE IP2, and issues these rules to the intranet UPF. Specifically, in the upstream direction, the public network SMF adds an IP address replacement field carrying UE IP2 to the forwarding action rules bound to the packet detection rules corresponding to the access traffic of the campus intranet. The intranet UPF, based on the rules constructed by the public network SMF, replaces the field of UE IP1 with the field of UE IP2 when it detects that the field of UE IP1 is carried in data packets used by the campus UE to access the campus intranet, and forwards the replaced data packets to the campus intranet.

S302, when the intranet UPF detects that a field of the second IP address is carried in data packets sent from the campus intranet to the campus UE, the intranet UPF replaces the field of the second IP address with the field of the first IP address, and forwards the replaced data packets to the ULCL UPF for further forwarding to the campus UE.

Specifically, in the downstream direction, the public network SMF carries UE IP2 in the UE IP address field in the packet detection rules corresponding to the access traffic of the campus intranet, and adds a user IP address replacement field carrying UE IP1 to the forwarding action rules bound to these packet detection rules. The intranet UPF, based on the rules constructed by the public network SMF, replaces the field of UE IP2 with the field of UE IP1 when it detects that a field of UE IP2 is carried in data packets sent from the campus intranet to the campus UE, and forwards the replaced data packets to the ULCL UPF for further forwarding to the campus UE.

Up to this point, the process shown in Figure 3 is completed.

The effect achieved through the process in Figure 3 is that after the DN-AAA assigns the second IP address to the campus UE, the intranet UPF performs IP address replacement, solving the aforementioned IP address conflict issue. Additionally, the GPSI of the campus UE and the UE IP2 assigned by the DN-AAA can establish a mapping during the secondary authentication process of the DN-AAA, which facilitates subsequent security traceability within the campus.

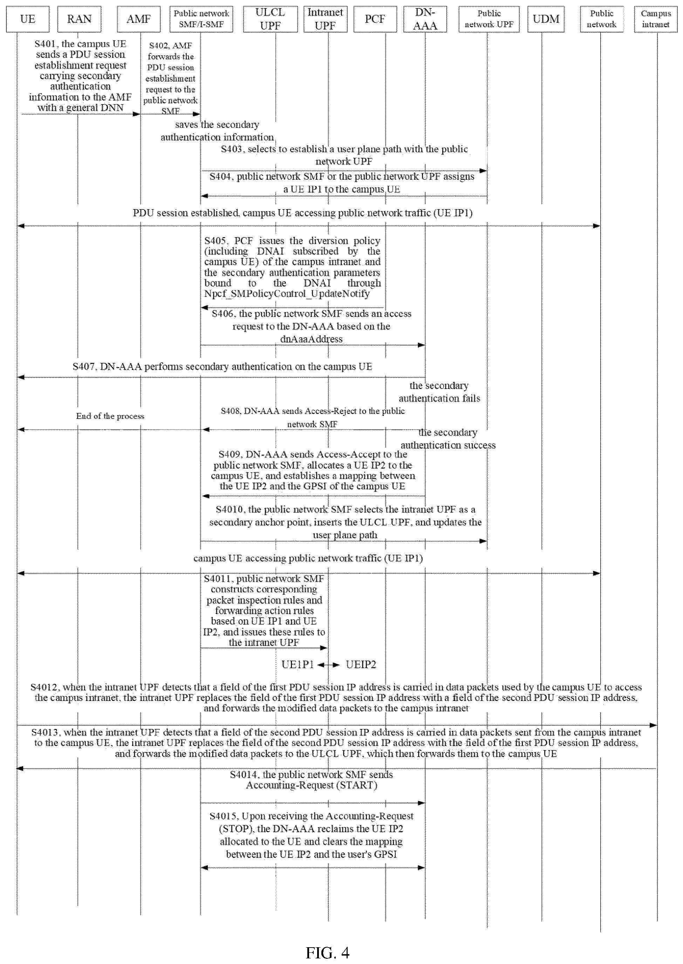

Figure 4 is a schematic diagram illustrating the interaction process of an access method for a 5G dual-domain private network provided in an exemplary example of the present disclosure. This access method for the 5G dual-domain private network is implemented based on the networking architecture shown in Figure 1. As shown in Figure 4, the process includes the following blocks.

S401, the campus UE sends a PDU session establishment request to the AMF with a general DNN.

In this example, the PDU session establishment request carries secondary authentication information of the campus UE. The secondary authentication information includes a username and password related to PAP authentication, and/or a user ID related to EAP authentication.

S402, AMF forwards the PDU session establishment request to the public network SMF.

S403, the public network SMF saves the secondary authentication information, selects to establish a user plane path with the public network UPF, and after the user plane path between the public network SMF and the public network UPF is established, sends a PDU session establishment accept to the campus UE to complete the establishment of the PDU session between the campus UE and the public network.

S404, during the process of establishing the user plane path between the public network SMF and the public network UPF, the public network SMF or the public network UPF assigns a UE IP1 to the campus UE.

At this point, the campus UE can access the public network, meaning that the PDU session between the campus UE and the public network has been established. After the PDU session is established, when the campus UE is located in an open area of the campus intranet or the campus UE accesses an application within the campus intranet, the following block S405 is executed.

S405, PCF issues the DNAI subscribed by the campus UE and the secondary authentication parameters bound to this DNAI to the public network SMF.

In this example, when the campus UE is located in an open area of the campus intranet or the campus UE accesses an application within the campus intranet, the public network SMF reports relevant information to the PCF through Npcf_SMPolicyControl_UpdateRequest, and the PCF issues the diversion policy (including the aforementioned DNAI) of the campus intranet and the secondary authentication parameters bound to the DNAI to the public network SMF through Npcf_SMPolicyControl_UpdateResponse or Npcf_SMPolicyControl_UpdateNotify. The secondary authentication parameters include: a secondary authentication identifier (secondaryAuth), an IP address of the DN-AAA (dnAaaAddress), and an identifier indicating that the DN-AAA needs to allocate an IP address (dnAaaIpAddressAllocation).

S406, When the public network SMF determines that the campus UE requires secondary authentication based on the secondaryAuth, it sends an access request to the DN-AAA based on the dnAaaAddress.

In this example, the access request is denoted as Access-Request, which carries the aforementioned secondary authentication information, 3GPP-Allocate-IP-Type attribute information, and the GPSI of the campus UE.

S407, DN-AAA performs secondary authentication on the campus UE. If the secondary authentication is unsuccessful, proceed to block S408 below; the secondary authentication is successful, proceed to block S409.

In this example, if the secondary authentication information forwarded by the SMF to the DN-AAA matches the authentication information already configured on the DN-AAA side, and the GPSI forwarded by the SMF to the DN-AAA matches the GPSI already configured on the DN-AAA side, the secondary authentication is successful. If the secondary authentication information forwarded by the SMF to the DN-AAA does not match the authentication information already configured on the DN-AAA side, and/or the GPSI forwarded by the SMF to the DN-AAA does not match the GPSI already configured on the DN-AAA side, the secondary authentication is unsuccessful.

S408, DN-AAA sends an access rejection message to the public network SMF.

In this example, the access rejection message is denoted as Access-Reject. When DN-AAA sends Access-Reject to the public network SMF, the process ends.

S409, DN-AAA sends an access success message to the public network SMF, allocates a UE IP2 to the campus UE, and establishes a mapping between the UE IP2 and the GPSI of the campus UE.

In this example, the access success message is denoted as Access-Accept.

S4010, after receiving the access success message, the public network SMF selects the intranet UPF as a secondary anchor point, inserts the ULCL UPF, and updates user plane paths.

At this point, the updated user plane paths are as follows: UE, base station, ULCL UPF, public network UPF, and public network; as well as UE, base station, ULCL UPF, intranet UPF, and campus intranet.

S4011, the public network SMF constructs corresponding packet inspection rules and forwarding action rules based on the UE IP1 and UE IP2, and issues these rules to the intranet UPF.

S4012, when the intranet UPF detects that a field of the first IP address is carried in data packets used by the campus UE to access the campus intranet, the intranet UPF replaces the field of the first IP address with a field of the second IP address, and forwards the modified data packets to the campus intranet.

S4013, when the intranet UPF detects that a field of the second IP address is carried in data packets sent from the campus intranet to the campus UE, the intranet UPF replaces the field of the second IP address with the field of the first IP address, and forwards the modified data packets to the ULCL UPF, which then forwards them to the campus UE.

S4014, after completing block S4011, the public network SMF sends an accounting start request to the DN-AAA, notifying the DN-AAA that the campus UE has successfully get access.

In this example, accounting start request is denoted as Accounting-Request (START).

S4015, when the campus UE is shut down, it triggers the deletion of the PDU session, and the SMF sends an accounting stop request to the DN-AAA.

In this example, the accounting stop request is denoted as Accounting-Request (STOP).

Upon receiving the Accounting-Request (STOP), the DN-AAA reclaims the UE IP2 allocated to the UE and clears the mapping between the UE IP2 and the user's GPSI.

By this point, the process illustrated in Figure 4 is completed.

The effects achieved through the process outlined in Figure 4 include not only enabling access to the campus intranet using a general DNN subject to secondary authentication, while accessing the public network using a general DNN is not subject to secondary authentication, that is, access to the public network is decoupled from the secondary authentication, but also avoiding potential IP conflicts through IP address replacement. Additionally, a mapping is established between the GPSI of the campus UE and the UE IP2 allocated by the DN-AAA during secondary authentication, facilitating subsequent security traceability within the campus.

Corresponding to the aforementioned examples of the access method for a 5G dual-domain private network, the present disclosure also provides examples of an access apparatus for a 5G dual-domain private network.

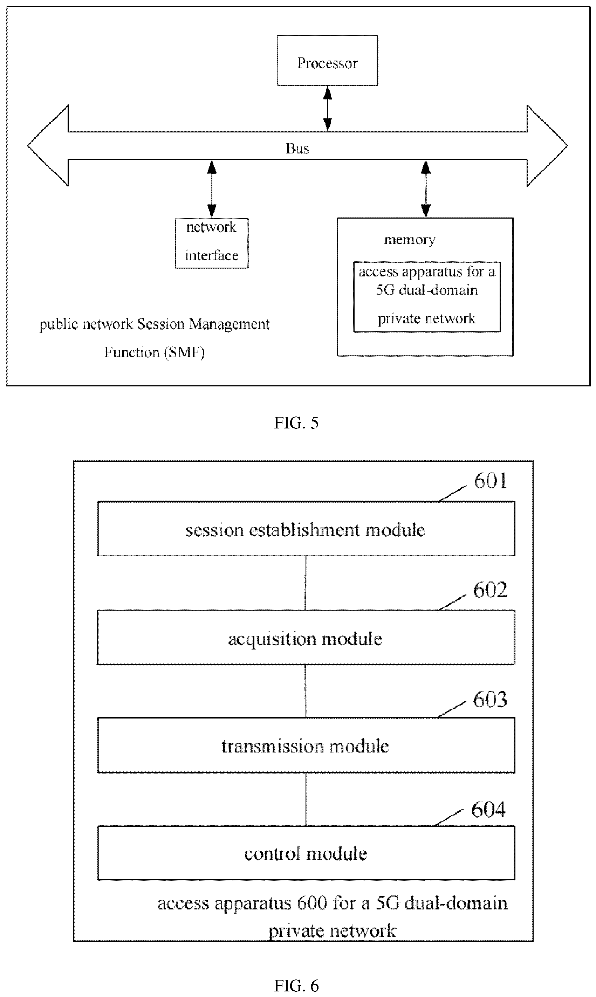

The examples of the access apparatus for a 5G dual-domain private network according to the present disclosure can be applied to the public network SMF. The apparatus examples can be implemented through software, hardware, or a combination of both. Taking software implementation as an example, as a logically defined apparatus, it is formed by the processor of the device in which the apparatus is located reading the corresponding computer program instructions from the non-volatile memory into the memory for execution. From a hardware perspective, Figure 5 shows a hardware architecture diagram of the device where the access apparatus for a 5G dual-domain private network is located. In addition to the processor, memory, network interface, and non-volatile memory shown in Figure 5, the device where the apparatus is located in the examples may typically include other hardware based on the actual functions of the device, which will not be elaborated here.

Figure 6 illustrates a schematic structure of an access apparatus for a 5G dual-domain private network provided in an example of the present disclosure. The access apparatus 600 for a 5G dual-domain private network in this example of the present disclosure can be applied to the public network SMF. As shown in Figure 6, the computational resource scheduling device 600 comprises: a session establishment module 601, an acquisition module 602, a transmission module 603, and a control module 604.

The session establishment module 601 is used for selecting, in response to a determination that a primary authentication between a campus UE and an Access and Mobility Management function (AMF), based on a received general Data Network Name (DNN) carried in a protocol data unit PDU session establishment request initiated by the campus UE, a public network user plane function (UPF) corresponding to the general DNN to establish a user plane path to trigger the establishment of a PDU session between the campus UE and the public network after the user plane path is established; and saving secondary authentication information carried in the PDU session establishment request, wherein the secondary authentication information is information that needs to be verified during a secondary authentication process.

The acquisition module 602 is used for obtaining from a policy control function (PCF), when it is determined that the campus UE needs to access a campus intranet, secondary authentication parameters that are bound to a data network access identifier (DNAI) subscribed by the campus UE. The secondary authentication parameters include a secondary authentication identifier and an IP address of the data network authentication, authorization, and accounting server (DN-AAA). The secondary authentication identifier indicates that the campus UE needs a secondary authentication.

The transmission module 603 is used for sending, when it is determined based on the secondary authentication identifier that the campus UE needs a secondary authentication, an access request carrying the secondary authentication information to the DN-AAA based on the IP address of the DN-AAA to trigger the DN-AAA to perform secondary authentication on the campus UE based on the secondary authentication information.

The control module 604 is used for triggering, upon receiving an access success message sent by the DN-AAA after determining that the campus UE has passed the secondary authentication based on the secondary authentication information, the ULCL UPF corresponding to the DNAI to divert the data packets from the campus UE to both the campus intranet and the public network.

As an example, when the secondary authentication parameters also include an IP address allocation identifier, it indicates that the campus UE requires the DN-AAA to allocate an IP address to the campus UE. The access request further carries 3GPP-Allocate-IP-Type attribute information, which is used to request the DN-AAA to allocate an IP address to the campus UE. The access success message received by this public network SMF also carries a second IP address allocated to the campus UE by the DN-AAA.

The apparatus further includes:
The transmission module is further used for: during the process of establishing a user plane path between the public network SMF and the public network UPF, the public network SMF allocating a first IP address for the campus UE and sending the first IP address to the campus UE, or receiving a first IP address allocated by the public network UPF for the campus UE and forwarding the first IP address to the campus UE.
The transmission module is further used for: issuing packet inspection rules and forwarding action rules determined based on the first IP address and the second IP address to an intranet UPF so that the intranet UPF can execute the packet inspection rules and forwarding action rules; the packet inspection rules and forwarding action rules are used to instruct the intranet UPF to replace a field of the first IP address with a field of the second IP address when detecting that the field of the first IP address is carried in data packets used by the campus UE to access the campus intranet, and forward the modified packets to the campus intranet, and, instruct the intranet UPF to replace the field of the second IP address with the field of the first IP address when detecting that the field of the second IP address is carried in data packets sent from the campus intranet to the campus UE, and forward the modified packets to the ULCL UPF, which then forwards them to the campus UE.

As an example, the access request also carries a General Public Subscriber Identifier (GPSI) of the campus UE;
wherein, triggering the DN-AAA to perform secondary authentication on the campus UE based on secondary authentication information includes:
sending the GPSI to the DN-AAA to trigger the DN-AAA to perform secondary authentication on the campus UE based on the secondary authentication information and the GPSI.

As an example, determining that the campus UE needs to access the campus intranet includes the following blocks:
determining that the campus UE needs to access the campus intranet when the campus UE is located in an open area of the campus intranet or when the campus UE accesses an application within the campus intranet.

For the apparatus examples, since they basically correspond to the method examples, please refer to the partial description of the method examples for relevant details. The apparatus examples described above are merely illustrative, where units described as separate components may or may not be physically separate, and components shown as units may or may not be physical units, which can be located in one place or distributed across multiple network units. Partial or all modules can be selected according to actual needs to achieve the purpose of the present disclosure. A person of ordinary skill in the art can understand and implement it without creative efforts.

Examples of the subject matter and functional operations described in this specification can be implemented in digital electronic circuitry, tangible embodied computer software or firmware, computer hardware, including the structures disclosed in this specification and their structural equivalents, or in combinations of one or more of them. Examples of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially generated propagated signal, such as a machine-generated electrical, optical, or electromagnetic signal, that is generated to encode information for transmission to a suitable receiver apparatus for execution by a data processing apparatus. A computer storage medium can be a machine-readable storage device, a machine-readable storage substrate, a random or serial access memory device, or a combination of one or more of them.

The processes and logic flows described in this specification can be performed by one or more programmable computers executing one or more computer programs to perform functions by operating on input data and generating output. The processes and logic flows can also be performed by special-purpose logic circuitry, such as an FPGA (Field-Programmable Gate Array) or an ASIC (Application-Specific Integrated Circuit), and the apparatus can also be implemented as special-purpose logic circuitry.

Computers suitable for executing computer programs include, for example, general-purpose and/or special-purpose microprocessors or any other type of central processing unit. Typically, a central processing unit will receive instructions and data from a read-only memory and/or a random access memory. The essential components of a computer include a central processing unit for carrying out or executing instructions and one or more memory devices for storing instructions and data. Generally, a computer will also include one or more mass storage devices for storing data, such as magnetic disks, magneto-optical disks, or optical disks, or the computer will be operably coupled to such mass storage devices to receive data from them or transmit data to them, or both. However, a computer need not have such devices. In addition, a computer can be embedded in another device, such as a mobile phone, a personal digital assistant (PDA), a mobile audio or video player, a game console, a Global Positioning System (GPS) receiver, or a portable storage device such as a Universal Serial Bus (USB) flash drive, to name just a few examples.

Computer-readable media suitable for storing computer program instructions and data include all forms of non-volatile memory, media, and memory devices, such as semiconductor memory devices (e.g., EPROM, EEPROM, and flash memory devices), magnetic disks (e.g., internal hard disks or removable disks), magneto-optical disks, and CD-ROM and DVD-ROM disks. Processors and memories can be supplemented by or incorporated into special-purpose logic circuits.

Although this specification contains many specific implementation details, these should not be interpreted as limiting the scope of any invention or the scope of protection claimed, but are primarily used to describe the characteristics of specific examples of the invention. Some features described in multiple examples within this specification may also be combined and implemented in a single example. On the other hand, various features described in a single example may also be implemented separately in multiple examples or in any suitable subcombination. Additionally, while features may function in certain combinations as described above and even initially claimed as such, one or more features from the claimed combinations may be removed from the combination in some cases, and the claimed combinations may refer to subcombinations or variations of subcombinations.

Similarly, although operations are depicted in a particular order in the drawings, this should not be interpreted as requiring that the operations be performed in the specific order shown or sequentially, or that all illustrated operations be performed, to achieve the desired results. In some cases, multitasking and parallel processing may be advantageous. Furthermore, the separation of various system modules and components in the above examples should not be interpreted as requiring such separation in all examples, and it should be understood that the described program components and systems can generally be integrated together in a single software product or packaged into multiple software products.

Thus, specific examples of the subject matter have been described. Other examples are within the scope of the appended claims. In some cases, acts recited in the claims may be performed in a different order and still achieve the desired results. Additionally, the processes depicted in the drawings do not necessarily require the specific order or sequential order shown to achieve the desired results. In some implementations, multitasking and parallel processing may be advantageous.

The above are merely preferred examples of the present disclosure and are not intended to limit the present disclosure. Any modifications, equivalent replacements, improvements, etc., made within the spirit and principles of the present disclosure should be included within the scope of protection of the present disclosure.

## Claims

1. An access method for a 5G dual-domain private network, applied to a public network Session Management Function, SMF, within a 5G Core Network, the method comprising:
in response to a determination that a primary authentication between a campus UE and an Access and Mobility Management function, AMF, is passed, based on a received general Data Network Name, DNN, carried in a protocol data unit, PDU, session establishment request initiated by the campus UE, selecting a public network User Plane Function, UPF, corresponding to the general DNN to establish a user plane path, to trigger the establishment of a PDU session between the campus UE and the public network after the user plane path is established; and saving secondary authentication information carried in the PDU session establishment request; the secondary authentication information is information that needs to be verified during a secondary authentication process;
when it is determined that the campus UE needs to access a campus intranet, obtaining from a Policy Control Function, PCF, secondary authentication parameters that are bound to a Data Network Access Identifier, DNAI, subscribed by the campus UE; the secondary authentication parameters include: a secondary authentication identifier, and an IP address of a Data Network Authentication, Authorization, and Accounting Server, DN-AAA; the secondary authentication identifier indicates that the campus UE needs a secondary authentication;
when it is determined based on the secondary authentication identifier that the campus UE needs a secondary authentication, sending an access request carrying the secondary authentication information to the DN-AAA based on the IP address of the DN-AAA to trigger the DN-AAA to perform secondary authentication on the campus UE based on the secondary authentication information;
upon receiving an access success message sent by the DN-AAA after determining that the campus UE has passed the secondary authentication based on the secondary authentication information, triggering an Uplink Classifier and Local Breakout User Plane Function, ULCL UPF, corresponding to the DNAI to divert the data packets from the campus UE to both the campus intranet and the public network.

2. The method according to claim 1, wherein when the secondary authentication parameters further include an IP address allocation identifier, the IP address allocation identifier is used to indicate that the campus UE requires the DN-AAA to allocate an IP address to the campus UE, the access request further carries 3GPP-Allocate-IP-Type attribute information, which is used to request the DN-AAA to allocate an IP address to the campus UE; the access success message received by the public network SMF also carries a second IP address allocated by the DN-AAA to the campus UE,
the method further includes:
during the process of establishing a user plane path between the public network SMF and the public network UPF, the public network SMF allocating a first IP address to the campus UE and sending the first IP address to the campus UE, or receiving a first IP address allocated by the public network UPF to the campus UE and forwarding the first IP address to the campus UE;
issuing packet inspection rules and forwarding action rules determined based on the first IP address and the second IP address to an intranet UPF so that the intranet UPF can execute the packet inspection rules and forwarding action rules; the packet inspection rules and forwarding action rules are used to instruct the intranet UPF to replace a field of the first IP address with a field of the second IP address when detecting that the field of the first IP address is carried in data packets used by the campus UE to access the campus intranet, and forward the modified data packets to the campus intranet, and, instruct the intranet UPF to replace the field of the second IP address with the field of the first IP address when detecting that the field of the second IP address is carried in data packets sent from the campus intranet to the campus UE, and forward the modified data packets to the ULCL UPF, which then forwards them to the campus UE.

3. The method according to claim 1, wherein the access request further carries a General Public Subscriber Identity GPSI of the campus UE,
wherein, triggering the DN-AAA to perform secondary authentication on the campus UE based on the secondary authentication information includes:
sending the GPSI to the DN-AAA to trigger the DN-AAA to perform secondary authentication on the campus UE based on the secondary authentication information and the GPSI.

4. The method according to claim 1, wherein determining that the campus UE needs to access the campus intranet includes:
determining that the campus UE needs to access the campus intranet when the campus UE is located in an open area of the campus intranet or when the campus UE accesses an application within the campus intranet.

5. An access system for a 5G dual-domain private network system, wherein the system comprises: a public network SMF of a 5G core network, a DN-AAA, a ULCL UPF, and an intranet UPF deployed within a campus intranet;
the public network SMF is used to execute the method of any of claims 1 to 4;
the DN-AAA is used to perform, when receiving the access request sent by the public network SMF, secondary authentication on the campus UE based on the secondary authentication information carried in the access request, or to perform secondary authentication on the campus UE based on the secondary authentication information and the GPSI of the campus UE carried in the access request, and to send an access success message to the public network SMF after determining that the campus UE has passed the secondary authentication;
the ULCL UPF is used to be triggered, after the public network SMF receives the access success message, to forward data packets, used by the campus UE to access the campus intranet, through the intranet UPF to the campus intranet, and to forward data packets, used by the campus UE to access the public network, through the public network UPF to the public network;
the intranet UPF is used to forward data packets sent by the ULCL UPF to the campus intranet, wherein the data packets are used by the campus UE to access the campus intranet, or, when receiving packet inspection rules and forwarding action rules issued by the public network SMF, the intranet UPF is used to replace a field of the first IP address with a field of the second IP address when detecting that the field of the first IP address is carried in data packets used by the campus UE to access the campus intranet based on the packet inspection rules and forwarding action rules, and forward the modified packets to the campus intranet; and to replace the field of the second IP address with the field of the first IP address when detecting that the field of the second IP address is carried in data packets sent from the campus intranet to the campus UE, and forward the modified packets to the ULCL UPF, which then forwards them to the campus UE.

6. The system according to claim 5, wherein performing secondary authentication on the campus UE based on the secondary authentication information carried in the access request includes:
in response to a determination that the secondary authentication information matches secondary authentication information already configured in the DN-AAA, then determining that the campus UE has passed the secondary authentication; if the secondary authentication information does not match the secondary authentication information already configured in the DN-AAA, then determining that the campus UE has not passed the secondary authentication;
and/or,
performing secondary authentication on the campus UE based on the secondary authentication information and the GPSI of the campus UE carried in the access request includes:
in response to a determination that the secondary authentication information matches the secondary authentication information already configured in the DN-AAA, and the GPSI of the campus UE matches a configured GPSI corresponding to the secondary authentication information already configured in the DN-AAA, then determining that the campus UE has passed the secondary authentication; if the secondary authentication information does not match the secondary authentication information already configured in the DN-AAA, and/or, the GPSI of the campus UE does not match the configured GPSI corresponding to the secondary authentication information already configured in the DN-AAA, then determining that the campus UE has not passed the secondary authentication.

7. An access apparatus for a 5G dual-domain private network, applied to a public network Session Management Function, SMF, in a 5G core network, the apparatus including:
a session establishment module, used for: in response to a determination that a primary authentication between a campus UE and an Access and Mobility Management function, AMF, is passed, based on a received general Data Network Name, DNN, carried in a protocol data unit PDU session establishment request initiated by the campus UE, selecting a public network User Plane Function, UPF, corresponding to the general DNN to establish a user plane path, to trigger the establishment of a PDU session between the campus UE and the public network after the user plane path is established; and saving secondary authentication information carried in the PDU session establishment request; wherein the secondary authentication information is information that needs to be verified during a secondary authentication process;
an acquisition module, used for obtaining from a Policy Control Function, PCF, when it is determined that the campus UE needs to access a campus intranet, secondary authentication parameters that are bound to a Data Network Access Identifier, DNAI, subscribed by the campus UE; wherein the secondary authentication parameters include: a secondary authentication identifier, and an IP address of a Data Network Authentication, Authorization, and Accounting Server, DN-AAA; the secondary authentication identifier indicates that the campus UE needs a secondary authentication;
a transmission module, used for sending, when it is determined based on the secondary authentication identifier that the campus UE needs a secondary authentication, an access request carrying the secondary authentication information to the DN-AAA based on the IP address of the DN-AAA to trigger the DN-AAA to perform secondary authentication on the campus UE based on the secondary authentication information; and
a control module, used for triggering, upon receiving an access success message sent by the DN-AAA after determining that the campus UE has passed the secondary authentication based on the secondary authentication information, the diversion of data packets from the campus UE to the campus intranet and the public network.

8. The apparatus according to claim 7, wherein, when the secondary authentication parameters further include an IP address allocation identifier, the IP address allocation identifier is used to indicate that the campus UE requires the DN-AAA to allocate an IP address to the campus UE, the access request also carries 3GPP-Allocate-IP-Type attribute information, which is used to request the DN-AAA to allocate an IP address to the campus UE; the access success message received by the public network SMF further carries a second IP address allocated by the DN-AAA to the campus UE,
the apparatus further comprises:
the transmission module is further used for: during the process of establishing a user plane path between the public network SMF and the public network UPF, the public network SMF allocating a first IP address for the campus UE and sending the first IP address to the campus UE, or receiving a first IP address allocated by the public network UPF for the campus UE and forwarding the first IP address to the campus UE;
the transmission module is further used for: issuing packet inspection rules and forwarding action rules determined based on the first IP address and the second IP address to an intranet UPF so that the intranet UPF can execute the packet inspection rules and forwarding action rules; the packet inspection rules and forwarding action rules are used to instruct the intranet UPF to replace a field of the first IP address with a field of the second IP address when detecting that the field of the first IP address is carried in data packets used by the campus UE to access the campus intranet, and forward the modified packets to the campus intranet, and, instruct the intranet UPF to replace the field of the second IP address with the field of the first IP address when detecting that the field of the second IP address is carried in data packets sent from the campus intranet to the campus UE, and forward the modified packets to the ULCL UPF, which then forwards them to the campus UE;
and/or,
the access request further carries a Generic Public Subscriber Identity GPSI of the campus UE;
wherein, triggering the DN-AAA to perform secondary authentication on the campus UE based on the secondary authentication information includes:
sending the GPSI to the DN-AAA to trigger the DN-AAA to perform secondary authentication on the campus UE based on the secondary authentication information and the GPSI;
and/or,
determining that the campus UE needs to access the campus intranet includes:
determining that the campus UE needs to access the campus intranet when the campus UE is located in an open area of the campus intranet or when the campus UE accesses an application within the campus intranet.

9. An electronic device, wherein the electronic device comprises:
a processor; and
a memory storing computer program instructions that, when executed by the processor, cause the processor to perform the method according to any one of claims 1 to 4.

10. A computer-readable storage medium, wherein:
the computer-readable storage medium stores computer program instructions that, when executed by a processor, cause the processor to perform the method according to any one of claims 1 to 4.

## Patentansprüche

1. Ein Zugriffsverfahren für ein privates 5G-Dual-Domain-Netz, das auf eine Session Management Function, SMF, des öffentlichen Netzes innerhalb eines 5G-Kernnetzes angewendet wird, wobei das Verfahren umfasst:
als Reaktion auf eine Feststellung, dass eine primäre Authentifizierung zwischen einem Campus-Nutzergerät und einer Zugangs- und Mobilitätsmanagementfunktion, AMF, bestanden wird, basierend auf einem empfangenen allgemeinen Datennetznamen, DNN, der in einer Protokolldateneinheit, PDU, Sitzungsaufbauanforderung, die von dem Campus-Nutzergerät initiiert wird, übertragen wird, Auswählen einer Benutzerebenenfunktion, UPF, des öffentlichen Netzes, die dem allgemeinen DNN entspricht, um einen Benutzerebenenpfad aufzubauen, um den Aufbau einer PDU-Sitzung zwischen dem Campus-Nutzergerät und dem öffentlichen Netz auszulösen, nachdem der Benutzerebenenpfad aufgebaut ist; und Speichern sekundärer Authentifizierungsinformationen, die in der PDU-Sitzungsaufbauanforderung enthalten sind; wobei die sekundären Authentifizierungsinformationen Informationen sind, die während eines sekundären Authentifizierungsprozesses verifiziert werden müssen;
wenn festgestellt wird, dass das Campus-Nutzergerät auf ein Campus-Intranet zugreifen muss, Erhalten von sekundären Authentifizierungsparametern von einer Policy Control Function, PCF, die an einen Data Network Access Identifier, DNAI, gebunden sind, der von dem Campus-Nutzergerät abonniert wurde; wobei die sekundären Authentifizierungsparameter umfassen: einen sekundären Authentifizierungsidentifikator und eine IP-Adresse eines Data Network Authentication, Authorization, and Accounting Server, DN-AAA; wobei der sekundäre Authentifizierungsidentifikator anzeigt, dass das Campus-Nutzergerät eine sekundäre Authentifizierung benötigt;
wenn auf der Grundlage der sekundären Authentifizierungskennung festgestellt wird, dass das Campus-Nutzergerät eine sekundäre Authentifizierung benötigt, Senden einer Zugriffsanforderung, die die sekundäre Authentifizierungsinformation trägt, an den DN-AAA auf der Grundlage der IP-Adresse des DN-AAA, um den DN-AAA zu veranlassen, eine sekundäre Authentifizierung an dem Campus-Nutzergerät auf der Grundlage der sekundären Authentifizierungsinformation durchzuführen;
beim Empfangen einer Zugriffserfolgsnachricht, die von der DN-AAA gesendet wird, nachdem festgestellt wurde, dass das Campus-Nutzergerät die sekundäre Authentifizierung auf der Grundlage der sekundären Authentifizierungsinformationen bestanden hat, Auslösen einer Uplink Classifier and Local Breakout User Plane Function, ULCL UPF, die der DNAI entspricht, um die Datenpakete vom Campus-Nutzergerät sowohl zum Campus-Intranet als auch zum öffentlichen Netz umzuleiten.

2. Verfahren nach Anspruch 1, wobei, wenn die sekundären Authentifizierungsparameter ferner einen IP-Adressenzuweisungsidentifikator enthalten, der IP-Adressenzuweisungsidentifikator verwendet wird, um anzuzeigen, dass das Campus-Nutzergerät den DN-AAA benötigt, um dem Campus-Nutzergerät eine IP-Adresse zuzuweisen, die Zugriffsanforderung ferner 3GPP-Allocate-IP-Type-Attributinformationen trägt, die verwendet werden, um den DN-AAA aufzufordern, dem Campus-Nutzergerät eine IP-Adresse zuzuweisen; wobei die vom SMF des öffentlichen Netzes empfangene Zugriffserfolgsnachricht auch eine zweite IP-Adresse trägt, die vom DN-AAA dem Campus-Nutzergerät zugewiesen wurde,
wobei das Verfahren ferner umfasst:
während des Prozesses des Aufbaus eines Nutzerebenenpfades zwischen dem SMF des öffentlichen Netzes und dem UPF des öffentlichen Netzes, wobei das SMF des öffentlichen Netzes dem Campus-Nutzergerät eine erste IP-Adresse zuweist und die erste IP-Adresse an das Campus-Nutzergerät sendet, oder eine erste IP-Adresse empfängt, die von dem UPF des öffentlichen Netzes dem Campus-Nutzergerät zugewiesen wurde, und die erste IP-Adresse an das Campus-Nutzergerät weiterleitet;
Ausgeben von Paketinspektionsregeln und Weiterleitungsaktionsregeln, die basierend auf der ersten IP-Adresse und der zweiten IP-Adresse bestimmt wurden, an eine Intranet-UPF, so dass die Intranet-UPF die Paketinspektionsregeln und Weiterleitungsaktionsregeln ausführen kann; die Paketinspektionsregeln und Weiterleitungsaktionsregeln verwendet werden, um die Intranet-UPF anzuweisen, ein Feld der ersten IP-Adresse durch ein Feld der zweiten IP-Adresse zu ersetzen, wenn erkannt wird, dass das Feld der ersten IP-Adresse in Datenpaketen enthalten ist, die von dem Campus-Nutzergerät für den Zugriff auf das Campus-Intranet verwendet werden, und die modifizierten Datenpakete an das Campus-Intranet weiterzuleiten, und die Intranet-UPF anzuweisen, das Feld der zweiten IP-Adresse durch das Feld der ersten IP-Adresse zu ersetzen, wenn erkannt wird, dass das Feld der zweiten IP-Adresse in Datenpaketen enthalten ist, die vom Campus-Intranet an das Campus-Nutzergerät gesendet werden, und die modifizierten Datenpakete an die ULCL-UPF weiterzuleiten, die sie dann an das Campus-Nutzergerät weiterleitet.

3. Verfahren nach Anspruch 1, wobei die Zugangsanforderung ferner eine General Public Subscriber Identity GPSI des Campus-Nutzergerät enthält,
wobei das Veranlassen des DN-AAA zur Durchführung einer sekundären Authentifizierung auf dem Campus-Nutzergerät auf der Grundlage der sekundären Authentifizierungsinformationen umfasst:
Senden der GPSI an den DN-AAA, um den DN-AAA zu veranlassen, eine sekundäre Authentifizierung auf dem Campus-Nutzergerät basierend auf den sekundären Authentifizierungsinformationen und der GPSI durchzuführen.

4. Verfahren nach Anspruch 1, wobei das Bestimmen, dass das Campus-Nutzergerät auf das Campus-Intranet zugreifen muss, umfasst:
Feststellen, dass die Campus-Nutzergerät auf das Campus-Intranet zugreifen muss, wenn sich das Campus-Nutzergerät in einem offenen Bereich des Campus-Intranets befindet oder wenn das Campus-Nutzergerät auf eine Anwendung innerhalb des Campus-Intranets zugreift.

5. Zugangssystem für ein 5G-Dual-Domain-Privatnetzsystem, wobei das System aufweist: ein öffentliches Netz-SMF eines 5G-Kernnetzes, ein DN-AAA, ein ULCL-UPF und ein Intranet-UPF, das innerhalb eines Campus-Intranets eingesetzt wird;
das SMF des öffentlichen Netzes wird verwendet, um das Verfahren nach einem der Ansprüche 1 bis 4 auszuführen; wobei
die DN-AAA verwendet wird, um beim Empfangen der von der SMF des öffentlichen Netzwerks gesendeten Zugriffsanforderung eine sekundäre Authentifizierung an dem Campus-Nutzergerät auf der Grundlage der in der Zugriffsanforderung übertragenen sekundären Authentifizierungsinformationen durchzuführen oder um eine sekundäre Authentifizierung an dem Campus-Nutzergerät auf der Grundlage der sekundären Authentifizierungsinformationen und der in der Zugriffsanforderung übertragenen GPSI des Campus-Nutzergerät durchzuführen und eine Zugriffserfolgsnachricht an die SMF des öffentlichen Netzwerks zu senden, nachdem festgestellt wurde, dass das Campus-Nutzergerät die sekundäre Authentifizierung bestanden hat;
die ULCL-UPF wird verwendet, um ausgelöst zu werden, nachdem die SMF des öffentlichen Netzes die Zugriffserfolgsnachricht empfängt, um Datenpakete, die von dem Campus-Nutzergerät für den Zugriff auf das Campus-Intranet verwendet werden, durch die Intranet-UPF an das Campus-Intranet weiterzuleiten, und um Datenpakete, die von dem Campus-Nutzergerät für den Zugriff auf das öffentliche Netz verwendet werden, durch die UPF des öffentlichen Netzes an das öffentliche Netz weiterzuleiten;
die Intranet-UPF wird verwendet, um Datenpakete, die von der ULCL-UPF gesendet werden, an das Campus-Intranet weiterzuleiten, wobei die Datenpakete von der Campus-Nutzergerät verwendet werden, um auf das Campus-Intranet zuzugreifen, oder, wenn sie Paketprüfungsregeln und Weiterleitungsaktionsregeln empfängt, die von der SMF des öffentlichen Netzes ausgegeben werden, die Intranet-UPF verwendet wird, um ein Feld der ersten IP-Adresse durch ein Feld der zweiten IP-Adresse zu ersetzen, wenn detektiert wird, dass das Feld der ersten IP-Adresse in Datenpaketen enthalten ist, die von dem Campus-Nutzergerät verwendet werden, um auf das Campus-Intranet zuzugreifen, basierend auf den Paketinspektionsregeln und Weiterleitungsaktionsregeln, und um die modifizierten Pakete an das Campus-Intranet weiterzuleiten; und das Feld der zweiten IP-Adresse durch das Feld der ersten IP-Adresse zu ersetzen, wenn festgestellt wird, dass das Feld der zweiten IP-Adresse in Datenpaketen enthalten ist, die vom Campus-Intranet an das Campus-Nutzergerät gesendet werden, und die modifizierten Pakete an die ULCL UPF weiterzuleiten, die sie dann an das Campus-Nutzergerät weiterleitet.

6. System nach Anspruch 5, wobei die Durchführung einer sekundären Authentifizierung auf dem Campus-Nutzergerät auf der Grundlage der sekundären Authentifizierungsinformationen, die in der Zugriffsanforderung enthalten sind, umfasst:
als Reaktion auf eine Feststellung, dass die sekundären Authentifizierungsinformationen mit den bereits im DN-AAA konfigurierten sekundären Authentifizierungsinformationen übereinstimmen, dann die Feststellung, dass das Campus-Nutzergerät die sekundäre Authentifizierung bestanden hat; wenn die sekundären Authentifizierungsinformationen nicht mit den bereits im DN-AAA konfigurierten sekundären Authentifizierungsinformationen übereinstimmen, dann die Feststellung, dass das Campus-Nutzergerät die sekundäre Authentifizierung nicht bestanden hat;
und/oder,
Durchführen einer sekundären Authentifizierung an dem Campus-Nutzergerät auf der Grundlage der sekundären Authentifizierungsinformation und der GPSI des Campus-Nutzergerät, die in der Zugangsanforderung enthalten ist:
als Reaktion auf eine Feststellung, dass die sekundären Authentifizierungsinformationen mit den sekundären Authentifizierungsinformationen übereinstimmen, die bereits in dem DN-AAA konfiguriert sind, und die GPSI des Campus-Nutzergerät mit einer konfigurierten GPSI übereinstimmt, die den sekundären Authentifizierungsinformationen entspricht, die bereits in dem DN-AAA konfiguriert sind, dann die Feststellung, dass das Campus-Nutzergerät die sekundäre Authentifizierung bestanden hat; wenn die sekundäre Authentifizierungsinformation nicht mit der sekundären Authentifizierungsinformation übereinstimmt, die bereits in der DN-AAA konfiguriert ist, und/oder wenn die GPSI des Campus-Nutzergerät nicht mit der konfigurierten GPSI übereinstimmt, die der sekundären Authentifizierungsinformation entspricht, die bereits in der DN-AAA konfiguriert ist, dann bestimmt wird, dass das Campus-Nutzergerät die sekundäre Authentifizierung nicht bestanden hat.

7. Eine Zugangsvorrichtung für ein privates 5G-Dual-Domain-Netz, die auf eine Session-Management-Funktion, SMF, des öffentlichen Netzes in einem 5G-Kernnetz angewendet wird, wobei die Vorrichtung umfasst:
ein Sitzungsaufbaumodul, verwendet für: als Reaktion auf eine Bestimmung, dass eine primäre Authentifizierung zwischen einem Campus-Nutzergerät und einer Zugangs- und Mobilitätsmanagementfunktion, AMF, bestanden wird, basierend auf einem empfangenen allgemeinen Datennetznamen, DNN, der in einer Protokolldateneinheit PDU-Sitzungsaufbauanforderung, die von dem Campus-Nutzergerät initiiert wird, übertragen wird, Auswählen einer Benutzerebenenfunktion, UPF, des öffentlichen Netzes, die dem allgemeinen DNN entspricht, um einen Benutzerebenenpfad aufzubauen, um den Aufbau einer PDU-Sitzung zwischen dem Campus-Nutzergerät und dem öffentlichen Netz auszulösen, nachdem der Benutzerebenenpfad aufgebaut ist; und Speichern sekundärer Authentifizierungsinformationen, die in der PDU-Sitzungsaufbauanforderung übertragen werden, wobei die sekundären Authentifizierungsinformationen Informationen sind, die während eines sekundären Authentifizierungsprozesses verifiziert werden müssen;
ein Erfassungsmodul, das verwendet wird, um von einer Policy Control Function, PCF, wenn festgestellt wird, dass das Campus-Nutzergerät auf ein Campus-Intranet zugreifen muss, sekundäre Authentifizierungsparameter zu erhalten, die an einen Data Network Access Identifier, DNAI, gebunden sind, der von dem Campus-Nutzergerät abonniert wurde; wobei die sekundären Authentifizierungsparameter umfassen: einen sekundären Authentifizierungsidentifikator und eine IP-Adresse eines Data Network Authentication, Authorization, and Accounting Server, DN-AAA; wobei der sekundäre Authentifizierungsidentifikator anzeigt, dass das Campus-Nutzergerät eine sekundäre Authentifizierung benötigt;
ein Sendemodul, das verwendet wird, um, wenn auf der Grundlage der sekundären Authentifizierungskennung festgestellt wird, dass das Campus-Nutzergerät eine sekundäre Authentifizierung benötigt, eine Zugriffsanforderung, die die sekundäre Authentifizierungsinformation trägt, an den DN-AAA auf der Grundlage der IP-Adresse des DN-AAA zu senden, um den DN-AAA zu veranlassen, eine sekundäre Authentifizierung an dem Campus-Nutzergerät auf der Grundlage der sekundären Authentifizierungsinformation durchzuführen; und
ein Steuermodul, das verwendet wird, um beim Empfangen einer Zugriffserfolgsnachricht, die von dem DN-AAA gesendet wird, nachdem festgestellt wurde, dass das Campus-Nutzergerät die sekundäre Authentifizierung auf der Grundlage der sekundären Authentifizierungsinformationen bestanden hat, die Umleitung von Datenpaketen von dem Campus-Nutzergerät zu dem Campus-Intranet und dem öffentlichen Netz auszulösen.

8. Vorrichtung nach Anspruch 7, wobei, wenn die sekundären Authentifizierungsparameter ferner einen IP-Adressenzuweisungsidentifikator enthalten, der IP-Adressenzuweisungsidentifikator verwendet wird, um anzuzeigen, dass das Campus-Nutzergerät den DN-AAA benötigt, um dem Campus-Nutzergerät eine IP-Adresse zuzuweisen, die Zugriffsanforderung auch 3GPP-Allocate-IP-Type-Attributinformationen trägt, die verwendet werden, um den DN-AAA aufzufordern, dem Campus-Nutzergerät eine IP-Adresse zuzuweisen; wobei die vom SMF des öffentlichen Netzes empfangene Zugriffserfolgsnachricht ferner eine zweite IP-Adresse trägt, die von dem DN-AAA dem Campus-Nutzergerät zugewiesen wurde,
wobei die Vorrichtung ferner aufweist:
das Sendemodul ferner dazu verwendet wird: während des Prozesses des Aufbaus eines Nutzerebenenpfades zwischen dem SMF des öffentlichen Netzes und dem UPF des öffentlichen Netzes, dem SMF des öffentlichen Netzes eine erste IP-Adresse für das Campus-Nutzergerät zuzuweisen und die erste IP-Adresse an das Campus-Nutzergerät zu senden, oder eine erste IP-Adresse zu empfangen, die von dem UPF des öffentlichen Netzes für das Campus-Nutzergerät zugewiesen wurde, und die erste IP-Adresse an das Campus-Nutzergerät weiterzuleiten;
das Übertragungsmodul weiterhin verwendet wird für: Ausgeben von Paketinspektionsregeln und Weiterleitungsaktionsregeln, die basierend auf der ersten IP-Adresse und der zweiten IP-Adresse bestimmt wurden, an eine Intranet-UPF, so dass die Intranet-UPF die Paketinspektionsregeln und Weiterleitungsaktionsregeln ausführen kann; die Paketprüfungsregeln und Weiterleitungsaktionsregeln verwendet werden, um die Intranet-UPF anzuweisen, ein Feld der ersten IP-Adresse durch ein Feld der zweiten IP-Adresse zu ersetzen, wenn festgestellt wird, dass das Feld der ersten IP-Adresse in Datenpaketen enthalten ist, die von dem Campus-Nutzergerät verwendet werden, um auf das Campus-Intranet zuzugreifen, und die modifizierten Pakete an das Campus-Intranet weiterzuleiten, und die Intranet-UPF anzuweisen, das Feld der zweiten IP-Adresse durch das Feld der ersten IP-Adresse zu ersetzen, wenn erkannt wird, dass das Feld der zweiten IP-Adresse in Datenpaketen enthalten ist, die vom Campus-Intranet an das Campus-Nutzergerät gesendet werden, und die modifizierten Pakete an die ULCL-UPF weiterzuleiten, die sie dann an das Campus-Nutzergerät weiterleitet; und/oder,
die Zugangsanforderung außerdem eine generische öffentliche Teilnehmeridentität GPSI des Campus-Nutzergerät enthält;
wobei das Auslösen des DN-AAA zur Durchführung einer sekundären Authentifizierung auf dem Campus-Nutzergerät auf der Grundlage der sekundären Authentifizierungsinformationen umfasst:
Senden der GPSI an den DN-AAA, um den DN-AAA zu veranlassen, eine sekundäre Authentifizierung auf dem Campus-Nutzergerät basierend auf den sekundären Authentifizierungsinformationen und der GPSI durchzuführen;
und/oder,
die Bestimmung, dass das Campus-Nutzergerät auf das Campus-Intranet zugreifen muss, umfasst:
Feststellen, dass das Campus-Nutzergerät auf das Campus-Intranet zugreifen muss, wenn sich das Campus-Nutzergerät in einem offenen Bereich des Campus-Intranets befindet oder wenn das Campus-Nutzergerät auf eine Anwendung innerhalb des Campus-Intranets zugreift.

9. Eine elektronische Vorrichtung, wobei die elektronische Vorrichtung aufweist:
einen Prozessor; und
einen Speicher, der Computerprogrammanweisungen speichert, die, wenn sie von dem Prozessor ausgeführt werden, den Prozessor veranlassen, das Verfahren nach einem der Ansprüche 1 bis 4 durchzuführen.

10. Ein computerlesbares Speichermedium, wobei:
das computerlesbare Speichermedium Computerprogrammanweisungen speichert, die, wenn sie von einem Prozessor ausgeführt werden, den Prozessor veranlassen, das Verfahren nach einem der Ansprüche 1 bis 4 durchzuführen.

## Revendications

1. Procédé d'accès pour un réseau privé à double domaine 5G, appliqué à une fonction de gestion de session, SMF, de réseau public au sein d'un réseau central 5G, le procédé comprenant :
en réponse à une détermination qu'une authentification primaire entre un UE de campus et une fonction de gestion d'accès et de mobilité, AMF, est réussie, sur la base d'un nom de réseau de données général reçu, DNN, porté dans une demande d'établissement de session d'unité de données de protocole, PDU, initiée par l'UE de campus, la sélection d'une fonction de plan utilisateur, UPF, de réseau public correspondant au DNN général pour établir un chemin de plan utilisateur, pour déclencher l'établissement d'une session PDU entre l'UE de campus et le réseau public après l'établissement du chemin de plan utilisateur ; et l'enregistrement d'informations d'authentification secondaire portées dans la demande d'établissement de session PDU ; les informations d'authentification secondaire sont des informations qui doivent être vérifiées pendant un processus d'authentification secondaire ;
lorsqu'il est déterminé que l'UE de campus a besoin d'accéder à un intranet de campus, l'obtention de paramètres d'authentification secondaire de fonction de commande de politique, PCF, qui sont liés à un identifiant d'accès au réseau de données, DNAI, souscrit par l'UE de campus ; les paramètres d'authentification secondaire comportent : un identifiant d'authentification secondaire, et une adresse IP d'un serveur d'authentification, d'autorisation et de comptabilité de réseau de données, DN-AAA ; l'identifiant d'authentification secondaire indique que l'UE de campus a besoin d'une authentification secondaire ;
lorsqu'il est déterminé, sur la base de l'identifiant d'authentification secondaire, que l'UE de campus a besoin d'une authentification secondaire, l'envoi d'une demande d'accès portant les informations d'authentification secondaire au DN-AAA sur la base de l'adresse IP du DN-AAA pour déclencher le DN-AAA pour réaliser une authentification secondaire sur l'UE de campus sur la base des informations d'authentification secondaire ;
à la réception d'un message de réussite d'accès envoyé par le DN-AAA après la détermination que l'UE de campus a réussi l'authentification secondaire sur la base des informations d'authentification secondaire, le déclenchement d'une fonction de plan utilisateur de classificateur de liaison montante et de dérivation locale, UPF ULCL, correspondant à l'ADNI pour détourner les paquets de données de l'UE de campus vers l'intranet de campus et le réseau public.

2. Procédé selon la revendication 1, dans lequel, lorsque les paramètres d'authentification secondaire comportent en outre un identifiant d'attribution d'adresse IP, l'identifiant d'attribution d'adresse IP est utilisé pour indiquer que l'UE de campus nécessite que le DN-AAA attribue une adresse IP à l'UE de campus, la demande d'accès porte en outre des informations d'attribut 3GPP-Allocate-IP-Type, qui sont utilisées pour demander au DN-AAA d'attribuer une adresse IP à l'UE de campus ; le message de réussite d'accès reçu par la SMF de réseau public porte également une seconde adresse IP attribuée par le DN-AAA à l'UE de campus,
le procédé comporte en outre :
au cours du processus d'établissement d'un chemin de plan utilisateur entre la SMF de réseau public et l'UPF de réseau public, la SMF de réseau public attribuant une première adresse IP à l'UE de campus et envoyant la première adresse IP à l'UE de campus, ou recevant une première adresse IP attribuée par l'UPF de réseau public à l'UE de campus et transférant la première adresse IP à l'UE de campus ;
l'émission de règles d'inspection de paquets et de règles d'action de transfert déterminées sur la base de la première adresse IP et de la seconde adresse IP vers une UPF d'intranet afin que l'UPF d'intranet puisse exécuter les règles d'inspection de paquets et les règles d'action de transfert ; les règles d'inspection de paquets et les règles d'action de transfert sont utilisées pour ordonner à l'UPF d'intranet de remplacer un champ de la première adresse IP par un champ de la seconde adresse IP lorsqu'il détecte que le champ de la première adresse IP est porté dans des paquets de données utilisés par l'UE de campus pour accéder à l'intranet de campus, et de transférer les paquets de données modifiés à l'intranet de campus, et, ordonner à l'UPF d'intranet de remplacer le champ de la seconde adresse IP par le champ de la première adresse IP lorsqu'il détecte que le champ de la seconde adresse IP est porté dans des paquets de données envoyés depuis l'intranet de campus vers l'UE de campus, et transférer les paquets de données modifiés à l'UPF ULCL qui les transfère ensuite à l'UE de campus.

3. Procédé selon la revendication 1, dans lequel la demande d'accès porte en outre une identité d'abonné public général, GPSI, de l'UE de campus,
dans lequel le déclenchement du DN-AAA pour réaliser une authentification secondaire sur l'UE de campus sur la base des informations d'authentification secondaire comporte :
l'envoi de la GPSI au DN-AAA pour déclencher le DN-AAA pour réaliser une authentification secondaire sur l'UE de campus sur la base des informations d'authentification secondaire et de la GPSI.

4. Procédé selon la revendication 1, dans lequel la détermination que l'UE de campus a besoin d'accéder à l'intranet de campus comporte :
la détermination que l'UE de campus a besoin d'accéder à l'intranet de campus lorsque l'UE de campus est situé dans une zone ouverte de l'intranet de campus ou lorsque l'UE de campus accède à une application au sein de l'intranet de campus.

5. Système d'accès pour un système de réseau privé à double domaine 5G, dans lequel le système comprend : une SMF de réseau public d'un réseau central 5G, un DN-AAA, une UPF ULCL et une UPF d'intranet déployée au sein d'un intranet de campus ;
la SMF de réseau public est utilisée pour exécuter le procédé selon l'une quelconque des revendications 1 à 4 ;
le DN-AAA est utilisé pour réaliser, lors de la réception de la demande d'accès envoyée par la SMF de réseau public, une authentification secondaire sur l'UE de campus sur la base des informations d'authentification secondaire portées dans la demande d'accès, ou pour réaliser une authentification secondaire sur l'UE de campus sur la base des informations d'authentification secondaire et de la GPSI de l'UE de campus portées dans la demande d'accès, et pour envoyer un message de réussite d'accès à la SMF de réseau public après la détermination que l'UE de campus a réussi l'authentification secondaire ;
l'UPF ULCL est utilisée pour être déclenchée, après la réception du message de réussite d'accès par la SMF de réseau public, pour transférer des paquets de données, utilisés par l'UE de campus pour accéder à l'intranet de campus, via l'UPF d'intranet vers l'intranet de campus, et pour transférer des paquets de données, utilisés par l'UE de campus pour accéder au réseau public, via l'UPF de réseau public vers le réseau public ;
l'UPF d'intranet est utilisée pour transférer des paquets de données envoyés par l'UPF ULCL vers l'intranet de campus, dans lequel les paquets de données sont utilisés par l'UE de campus pour accéder à l'intranet de campus, ou, lors de la réception de règles d'inspection de paquets et de règles d'action de transfert émises par la SMF de réseau public, l'UPF d'intranet est utilisée pour remplacer un champ de la première adresse IP par un champ de la seconde adresse IP lorsqu'il détecte que le champ de la première adresse IP est porté dans des paquets de données utilisés par l'UE de campus pour accéder à l'intranet de campus sur la base des règles d'inspection des paquets et des règles d'action de transfert, et transférer les paquets modifiés à l'intranet de campus ; et pour remplacer le champ de la seconde adresse IP par le champ de la première adresse IP lorsqu'il détecte que le champ de la seconde adresse IP est porté dans des paquets de données envoyés de l'intranet de campus à l'UE de campus, et transférer les paquets modifiés à l'UPF ULCL, qui les transfère ensuite à l'UE de campus.

6. Système selon la revendication 5, dans lequel la réalisation d'une authentification secondaire sur l'UE de campus sur la base des informations d'authentification secondaire portées dans la demande d'accès comporte :
en réponse à une détermination que les informations d'authentification secondaire correspondent à des informations d'authentification secondaire déjà configurées dans le DN-AAA, alors la détermination que l'UE de campus a réussi l'authentification secondaire ; si les informations d'authentification secondaire ne correspondent pas aux informations d'authentification secondaire déjà configurées dans le DN-AAA, alors la détermination que l'UE de campus n'a pas réussi l'authentification secondaire ;
et/ou,
la réalisation d'une authentification secondaire sur l'UE de campus sur la base des informations d'authentification secondaire et de la GPSI de l'UE de campus portées dans la demande d'accès comporte :
en réponse à une détermination que les informations d'authentification secondaire correspondent aux informations d'authentification secondaire déjà configurées dans le DN-AAA, et que la GPSI de l'UE de campus correspond à une GPSI configurée correspondant aux informations d'authentification secondaire déjà configurées dans le DN-AAA, alors la détermination que l'UE de campus a réussi l'authentification secondaire ; si les informations d'authentification secondaire ne correspondent pas aux informations d'authentification secondaire déjà configurées dans le DN-AAA, et/ou la GPSI de l'UE de campus ne correspond pas à la GPSI configurée correspondant aux informations d'authentification secondaire déjà configurées dans le DN-AAA, alors la détermination que l'UE de campus n'a pas réussi l'authentification secondaire.

7. Appareil d'accès pour un réseau privé à double domaine 5G, appliqué à une fonction de gestion de session, SMF, de réseau public, dans un réseau central 5G, l'appareil comportant :
un module d'établissement de session, utilisé pour : en réponse à une détermination qu'une authentification primaire entre un UE de campus et une fonction de gestion d'accès et de mobilité, AMF, est réussie, sur la base d'un nom de réseau de données général reçu, DNN, porté dans une demande d'établissement de session d'unité de données de protocole PDU initiée par l'UE de campus, la sélection d'une fonction de plan utilisateur de réseau public, UPF, correspondant au DNN général pour établir un chemin de plan utilisateur, pour déclencher l'établissement d'une session de PDU entre l'UE de campus et le réseau public après l'établissement du chemin de plan utilisateur ; et l'enregistrement d'informations d'authentification secondaire portées dans la demande d'établissement de session PDU ; dans lequel les informations d'authentification secondaire sont des informations qui doivent être vérifiées pendant un processus d'authentification secondaire ;
un module d'acquisition, utilisé pour obtenir auprès d'une fonction de commande de politique, PCF, lorsqu'il est déterminé que l'UE de campus a besoin d'accéder à un intranet de campus, des paramètres d'authentification secondaire qui sont liés à un identifiant d'accès au réseau de données, DNAI, souscrit par l'UE de campus ; dans lequel les paramètres d'authentification secondaire comportent : un identifiant d'authentification secondaire, et une adresse IP d'un serveur d'authentification, d'autorisation et de comptabilité de réseau de données, DN-AAA ; l'identifiant d'authentification secondaire indique que l'UE de campus a besoin d'une authentification secondaire ;
un module de transmission, utilisé pour envoyer, lorsqu'il est déterminé, sur la base de l'identifiant d'authentification secondaire, que l'UE de campus a besoin d'une authentification secondaire, une demande d'accès portant les informations d'authentification secondaire au DN-AAA sur la base de l'adresse IP du DN-AAA pour déclencher le DN-AAA pour réaliser une authentification secondaire sur l'UE de campus sur la base des informations d'authentification secondaire ; et
un module de commande, utilisé pour déclencher, à la réception d'un message de réussite d'accès envoyé par le DN-AAA après la détermination que l'UE de campus a réussi l'authentification secondaire sur la base des informations d'authentification secondaire, le détournement de paquets de données de l'UE de campus vers l'intranet de campus et le réseau public.

8. Appareil selon la revendication 7, dans lequel, lorsque les paramètres d'authentification secondaire comportent en outre un identifiant d'attribution d'adresse IP, l'identifiant d'attribution d'adresse IP est utilisé pour indiquer que l'UE de campus exige que le DN-AAA attribue une adresse IP à l'UE de campus, la demande d'accès porte également des informations d'attribut 3GPP-Allocate-IP-Type, qui sont utilisées pour demander au DN-AAA d'attribuer une adresse IP à l'UE de campus ; le message de réussite d'accès reçu par la SMF de réseau public porte en outre une seconde adresse IP attribuée par le DN-AAA à l'UE de campus,
l'appareil comprend en outre :
le module de transmission est en outre utilisé pour : pendant le processus d'établissement d'un chemin de plan utilisateur entre la SMF de réseau public et l'UPF de réseau public, par la SMF de réseau public, l'attribution d'une première adresse IP pour l'UE de campus et l'envoi de la première adresse IP à l'UE de campus, ou la réception d'une première adresse IP attribuée par l'UPF de réseau public pour l'UE de campus et l'envoi de la première adresse IP à l'UE de campus ;
le module de transmission est en outre utilisé pour : l'émission de règles d'inspection de paquets et de règles d'action de transfert déterminées sur la base de la première adresse IP et de la seconde adresse IP vers un UPF d'intranet afin que l'UPF d'intranet puisse exécuter les règles d'inspection de paquets et les règles d'action de transfert ; les règles d'inspection de paquets et les règles d'action de transfert sont utilisées pour ordonner à l'UPF d'intranet de remplacer un champ de la première adresse IP par un champ de la seconde adresse IP lorsqu'il détecte que le champ de la première adresse IP est porté dans des paquets de données utilisés par l'UE de campus pour accéder à l'intranet de campus, et de transférer les paquets modifiés à l'intranet de campus, et pour ordonner à l'UPF d'intranet de remplacer le champ de la seconde adresse IP par le champ de la première adresse IP lorsqu'il détecte que le champ de la seconde adresse IP est porté dans des paquets de données envoyés de l'intranet de campus vers l'UE de campus, et de transférer les paquets modifiés à l'UPF ULCL, qui les transfère ensuite à l'UE de campus ;
et/ou,
la demande d'accès porte en outre une identité d'abonné public générique, GPSI, de l'UE de campus ;
dans lequel le déclenchement du DN-AAA pour réaliser une authentification secondaire sur l'UE de campus sur la base des informations d'authentification secondaire comporte :
l'envoi de la GPSI au DN-AAA pour déclencher le DN-AAA pour réaliser une authentification secondaire sur l'UE de campus sur la base des informations d'authentification secondaire et de la GPSI ;
et/ou,
la détermination que l'UE de campus a besoin d'accéder à l'intranet de campus comporte :
la détermination que l'UE de campus a besoin d'accéder à l'intranet de campus lorsque l'UE de campus est situé dans une zone ouverte de l'intranet de campus ou lorsque l'UE de campus accède à une application au sein de l'intranet de campus.

9. Dispositif électronique, dans lequel le dispositif électronique comprend :
un processeur ; et
une mémoire stockant des instructions de programme informatique qui, lorsqu'elles sont exécutées par le processeur, amènent le processeur à réaliser le procédé selon l'une quelconque des revendications 1 à 4.

10. Support de stockage lisible par ordinateur, dans lequel :
le support de stockage lisible par ordinateur stocke des instructions de programme informatique qui, lorsqu'elles sont exécutées par un processeur, amènent le processeur à réaliser le procédé selon l'une quelconque des revendications 1 à 4.
